# EUROPÄISCHE PATENTSCHRIFT

(11) **EP 3 003 865 B1**
(45) Veröffentlichungstag und Bekanntmachung des Hinweises auf die Patenterteilung: **03.05.2017**
(21) Anmeldenummer: 14712641.1
(22) Anmeldetag: 20.03.2014
(51) Int. Cl.: B65B 9/06, B65B 35/24, B65B 35/10, B65B 35/44, B65B 35/50, B65B 41/18, B65G 47/08, B65B 9/20, B65B 9/22

(54) **FOLIENBAHNUMLENKVORRICHTUNG SOWIE VORRICHTUNG ZUR HERSTELLUNG VON VERPACKUNGSEINHEITEN UMFASSEND EINE FOLIENBAHNUMLENKVORRICHTUNG**
FILM WEB DEFLECTING DEVICE AND DEVICE FOR PRODUCING PACKAGED UNITS COMPRISING A FILM WEB DEFLECTING DEVICE
DISPOSITIF DE RENVOI DE BANDE CONTINUE DE FILM AINSI QUE DISPOSITIF DE PRODUCTION D'UNITÉS D'EMBALLAGE COMPRENANT UN DISPOSITIF DE RENVOI DE BANDE CONTINUE DE FILM

(30) Priorität: 07.06.2013 DE 102013210630
(43) Veröffentlichungstag der Anmeldung: 13.04.2016
(73) Patentinhaber: Hastamat Verpackungstechnik GmbH, 35633 Lahnau (DE)
(72) Erfinder: SCHMACHTEL, Markus, 35469 Allendorf (DE)
(74) Vertreter: advotec.
(86) Internationale Anmeldenummer: PCT/EP2014/055641
(87) Internationale Veröffentlichungsnummer: WO 2014/195038

(56) Entgegenhaltungen:
- EP-A1- 0 399 948
- WO-A1-2011/129883
- DE-A1-102011 106 352
- DE-U1-202009 014 336

## Beschreibung

Die vorliegende Anmeldung betrifft eine Folienbahnumlenkvorrichtung für eine Vorrichtung zur Herstellung von Verpackungseinheiten, die eine in eine Folienbahn eingehüllte Portionseinheit aufweisen, mit einer Folienbahnfördereinrichtung zur Förderung einer Folienbahn längs eines horizontalen Förderbandabschnitts und eines vertikalen Förderbahnabschnitts,
wobei die Förderbahnumlenkvorrichtung zur Umleitung der Folienbahn von dem horizontalen Förderbahnabschnitt in den vertikalen Förderbahnabschnitt und zur Ausbildung einer Folienumhüllung für eine den vertikalen Förderbahnabschnitt zugeführte, zwischen Portionsanschlägen aufgenommene Portionseinheit an einem oberen Ende der Förderbahnumlenkvorrichtung auf einer vertikalen Hüllachse eine von zwei Formschultern begrenzte Eintrittsöffnung und an ihrem unteren Ende seitlich zur Hüllachse versetzt einen Folienrand-Führungsschlitz aufweist.

Des Weiteren betrifft die Anmeldung eine Vorrichtung zur Herstellung von Verpackungseinheiten, die eine in eine Folienbahn eingehüllte Portionseinheit aufweisen, mit einer Folienbahn-Fördereinrichtung zur Förderung einer Folienbahn längs eines horizontalen Förderbahnabschnitts und eines vertikalen Förderbahnabschnitts, einer Portionsfördereinrichtung zur Förderung der Portionseinheiten, einer Folienbahnumlenkvorrichtung zur Umlenkung der Folienbahn von dem horizontalen Förderbahnabschnitt in den vertikalen Förderbahnabschnitt und zur Ausbildung einer Folienumhüllung für die dem vertikalen Förderbahnabschnitt zugeführten, zwischen Portionsanschlägen aufgenommenen Portionseinheiten, und einer die Portionseinheiten zusammen mit der Folienbahn am Umfang aufnehmenden Vertikalfördereinrichtung.

Aus der DE-A-10 2011 106 352 ist eine Folienbahnumlenkvorrichtung bekannt, die eine Formschulter zur Umleitung einer Folienbahn von einem horizontalen Förderbahnabschnitt in einen vertikalen Förderbahnabschnitt aufweist und zur Ausbildung einer Folienumhüllung für eine dem vertikalen Förderbahnabschnitt zugeführte Portionseinheit dient. Am unteren Ende der Folienbahnumlenkvorrichtung und seitlich zu einer vertikalen Hüllachse versetzt ist ein Folienrandführungsschlitz angeordnet, um eine Zusammenführung der Folienränder für eine Längsversiegelung zu ermöglichen.

Die bekannte Folienbahnumlenkvorrichtung dient dazu, eine Folienbahn von einem horizontalen Förderbahnabschnitt derart in einen vertikalen Förderbahnabschnitt umzuleiten, dass dem vertikalen Förderbahnabschnitt Portionseinheiten zugeführt und diese Portionseinheiten im Verlauf des vertikalen Förderbahnabschnitts von der Folienbahn zur Ausbildung von Verpackungseinheiten umhüllt werden. Dabei sind die Portionseinheiten während ihrer vertikalen Zuführung zwischen Portionsanschlägen aufgenommen, die zusammen mit der Portionseinheit in eine Eintrittsöffnung der Folienbahnumlenkvorrichtung eintreten und während der Ausbildung der Umhüllung der Portionseinheit von der Portionseinheit entfernt werden, bevor im Verlauf des weiteren vertikalen Förderbahnabschnitts eine hermetische

Versiegelung der Umhüllung erfolgt. Dabei erweist es sich als Problem, einerseits eine Kollisionsfreiheit zwischen der die Umhüllung ausbildenden Folienbahn und den Portionsanschlägen zu gewährleisten und andererseits trotz der Umlenkung der Folienbahn die Ausbildung einer faltenfreien und plastisch unverformten Umhüllung und damit die Erzeugung einer nicht nur hinsichtlich ihrer Funktion, sondern auch unter ästhetischen Gesichtspunkten befriedigenden Verpackungseinheit zu ermöglichen.

Der vorliegenden Erfindung liegt somit die Aufgabe zugrunde, eine Folienbahnumlenkvorrichtung vorzuschlagen, die die betriebssichere Herstellung von ästhetisch anspruchsvollen Verpackungseinheiten aus einer in einer Folienbahn-Umhüllung aufgenommenen Portionseinheiten in einem vertikalen Förderbahnabschnitt einer Vorrichtung zur Herstellung von Verpackungseinheiten ermöglicht.

Diese Aufgabe wird durch eine Folienbahnumlenkvorrichtung mit den Merkmalen des Anspruchs 1 bzw. eine Vorrichtung zur Herstellung von Verpackungseinheiten umfassend eine derartige Folienbahnumlenkvorrichtung mit den Merkmalen des Anspruchs 8 gelöst.

Die erfindungsgemäße Folienbahnumlenkvorrichtung ermöglicht durch die besondere Ausgestaltung mit Formschultern, deren Schulterränder Folienbahn-Führungskanten aufweisen, die in einer gemeinsamen Führungsebene angeordnet sind, die unter einem Führungswinkel α gegenüber der Hüllachse geneigt ist und sich von der Eintrittsöffnung in Richtung auf den Folienrand-Führungsschlitz erstreckt, eine definierte Anlage der Folienbahn an den Führungskanten und somit eine definierte Ausgestaltung der Umhüllungsöffnung, so dass einerseits ein Kollisionsfreiheit mit den Portionsanschlägen gewährleistender Durchtrittsspalt und zum andern eine definierte Folienbahn-Führung im Bereich der Umhüllungsöffnung gegeben ist, so dass die Ausbildung von Falten oder lokalen plastischen Verformungen der Folienbahn aufgrund unzureichender Führung der Folienbahn bzw. der Folienbahnränder im Bereich der Umhüllungsöffnung verhindert werden kann.

Besonders gute Führungseigenschaften werden erreicht, wenn Führungskantenabschnitte der Führungskanten unter einem Winkel β zueinander geneigt sind, derart, dass die Führungskanten in Richtung auf den Folienrand-Führungsschlitz V-förmig aufeinander zulaufen.

Wenn sich die Führungskanten der Formschultern von der Eintrittsöffnung zum Folienrand-Führungsschlitz hin erstrecken, kann eine Führung erreicht werden, die sich im Wesentlichen über die gesamte Länge der im Bereich der Formschultern aufeinander zu geführten Folienränder erstreckt, wobei je nach Größe bzw. Länge der Portionseinheit in Richtung der Hüllachse gesehen eine lediglich teilweise Erstreckung der Führungskanten bis zum Folienrand-Führungsschlitz hin oder eine sich vollständig bis zum Folienrand-Führungsschlitz hin erstreckende, also im Wesentlichen keinen Abstand zwischen den Enden der Führungskanten und dem Folienrand-Führungsschlitz aufweisende Ausgestaltung der Führungskanten besonders vorteilhaft ist.

Wenn die Führungskanten durch Oberflächenränder von Führungsflanken der Formschultern gebildet sind, die Anlageflächen für die Folienränder der Folienbahn ausbilden, werden die Folienränder während der Umhüllung besonders definiert geführt; insbesondere kann eine unerwünschte Flatterbewegung der Folienränder quer zur Förderrichtung der Folienbahn im vertikalen Förderbahnabschnitt wirksam verhindert werden.

Besonders vorteilhaft ist es, wenn die Formschultern über ein Kragenstück miteinander verbunden sind, derart, dass die Eintrittsöffnung zum horizontalen Förderbahnabschnitt hin geschlossen ist und das Kragenstück eine zur Eintrittsöffnung hin ansteigende Führungsflanke für die Folienbahn ausbildet, so dass die Formschultern ohne weitere zusätzliche konstruktive Maßnahme eine definierte Abstützung der Folienbahn auf ihrer gesamten Breite während des Eintritts der Folienbahn in die Eintrittsöffnung ermöglichen.

Alternativ ist es möglich, dass die Formschultern unabhängig voneinander ausgebildet sind, derart, dass die Eintrittsöffnung zum horizontalen Förderbahnabschnitt hin einen Kragenspalt aufweist und die Formschultern eine zur Eintrittsöffnung hin abfallenden Führungsflanke für die Folienbahn ausbilden, die in einer gemeinsamen Führungsebene mit einer Führungsfläche einer den Kragenspalt überbrückenden Führungseinrichtung angeordnet ist. Hierdurch ist es möglich, die Formschultern selbst mit geringer Masse bzw. geringem Körpervolumen auszubilden, so dass eine besonders raumsparende Ausgestaltung der Folienbahnumlenkvorrichtung möglich wird. Darüber hinaus wird eine definierte Abstützung der Folienbahn in ihrer gesamten Breite bereits unmittelbar vor Eintritt der Folienbahn in die Eintrittsöffnung durch die unabhängig von den Formschultern ausgewählte Führungseinrichtung ermöglicht.

Besonders vorteilhaft ist es, wenn der Folienrand-Führungsschlitz in Richtung der Hüllachse betrachtet diametral gegenüberliegend dem Kragenstück oder der den Kragenspalt überbrückenden Führungseinrichtung angeordnet ist, da sich hierdurch einerseits eine Folienbahnumlenkvorrichtung ausgestalten lässt, die einen in Richtung der Hüllachse verlaufenden, großzügig bemessenden Formschulterspalt zur Ausbildung des Durchtritts aufweist, andererseits jedoch in Richtung der Hüllachse betrachtet die Eintrittsöffnung einen im Wesentlichen konzentrisch zur Hüllachse ausgebildeten Öffnungsrand aufweist.

Die erfindungsgemäße Vorrichtung weist die Merkmale des Anspruchs 8 auf und umfasst die erfindungsgemäße Folienbahnumlenkvorrichtung mit den vorstehend erläuterten vorteilhaften Merkmalen.

Nachfolgend werden bevorzugte Ausführungsformen der Erfindung anhand der Zeichnung näher erläutert. Es zeigen:
- **Fig. 1**: eine Vorrichtung zur Herstellung von Verpackungseinheiten umfassend eine Folienbahnumlenkvorrichtung gemäß einer ersten Ausführungsform;
- **Fig. 2**: die in **Fig. 1** dargestellte Folienbahnumlenkvorrichtung in Einzeldarstellung und Frontansicht;
- **Fig. 3**: die in **Fig. 2** dargestellte Folienbahnumlenkvorrichtung in Seitenansicht;
- **Fig. 4**: die in **Fig. 2** dargestellte Folienbahnumlenkvorrichtung in Draufsicht;
- **Fig. 5**: eine Folienbahnumlenkvorrichtung gemäß einer weiteren Ausführungsform in Frontansicht;
- **Fig. 6**: die in **Fig. 5** dargestellte Folienbahnumlenkvorrichtung in Seitenansicht;
- **Fig. 7**: die **in** **Fig. 5** dargestellte Folienbahnumlenkvorrichtung in Draufsicht.

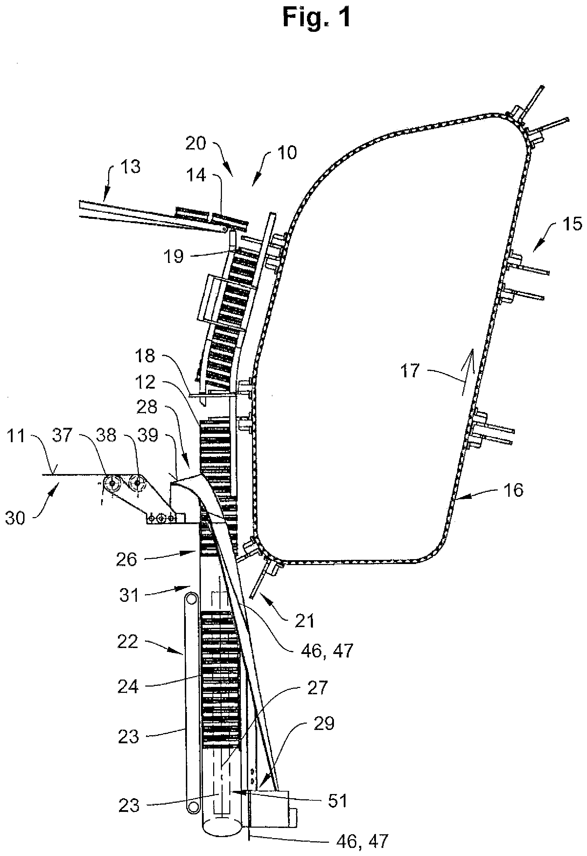

**Fig. 1** zeigt eine Verpackungsvorrichtung 10, die zur Herstellung von nicht näher dargestellten Verpackungseinheiten umfassend eine in eine Folienbahn 11 eingehüllte Portionseinheit 12 dient. Die Verpackungsvorrichtung 10 umfasst in der in **Fig. 1** dargestellten Ausführungsform eine Produktfördereinrichtung 13, mittels der vereinzelte Produkte 14 einer Portionsfördereinrichtung 15 zugefördert werden, die im vorliegenden Fall einen Umlaufförderer 16 mit unabhängig voneinander in Förderrichtung 17 bewegten Portionsanschlägen 18, 19 aufweist, die kinematisch so gesteuert werden, dass in einem Übergabebereich 20 zwischen der Produktfördereinrichtung 13 und der Portionsfördereinrichtung 15 aufeinander folgend einzelne Produkte 14 auf einen vorderen Portionsanschlag 18 gestapelt werden, der während der Stapelung im Takt in Förderrichtung 17 des Umlaufförderers 16 vorbewegt wird, bis schließlich nach Erreichen einer definierten Stapelhöhe der hintere Portionsanschlag 19 gegen die gestapelte Portionseinheit 12 verfahren wird, so dass die Portionseinheit 12 definiert zwischen den Portionsanschlägen 18 und 19 aufgenommen ist.

Zur Übergabe an eine unterhalb eines Übergabebereichs 21 angeordnete Vertikalfördereinrichtung 22, die im vorliegenden Fall aus drei Umlaufförderern 23 besteht, welche am Umfang der Portionseinheit 12 verteilt angeordnet sind, wird die Portionseinheit 12 einer Folienbahnumlenkvorrichtung 26 zugeführt, die an ihrem oben Ende eine auf einer vertikalen Hüllachse 27 angeordnete Eintrittsöffnung 28 und an ihrem unteren Ende seitlich zur Hüllachse 27 versetzt einen Folienrand-Führungsschlitz 29 aufweist.

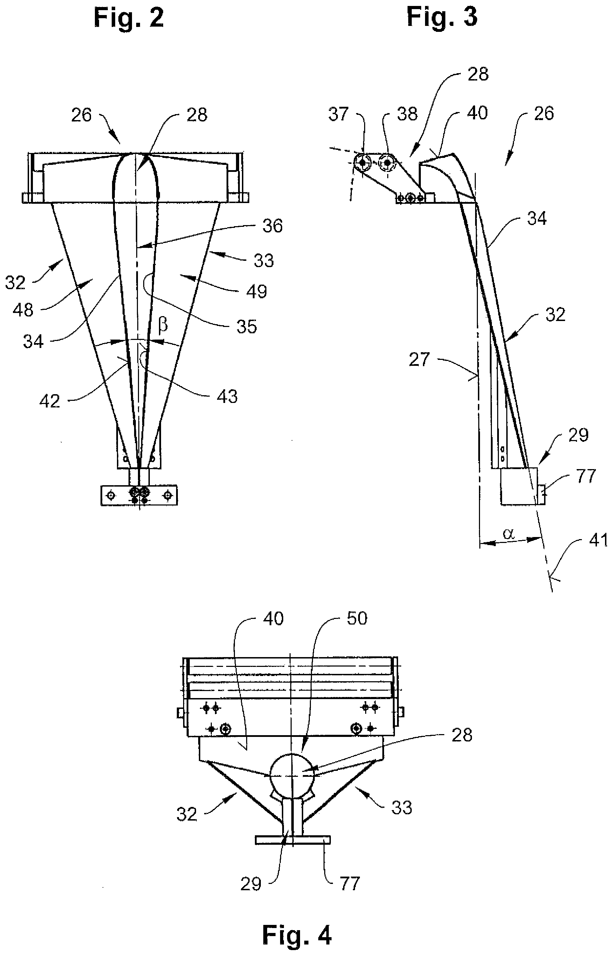

Wie **Fig. 1** zeigt, dient die Folienbahnumlenkvorrichtung 26 darüber hinaus zur Umleitung der Folienbahn 11 von einem horizontalen Förderbahnabschnitt 30 in einen vertikalen Förderbahnabschnitt 31, wobei die Ausbildung einer Folienumhüllung 24 der Portionseinheit 12 mit die Eintrittsöffnung 28 begrenzenden Formschultern 32, 33 **(****Fig. 2****)** der Folienbahnumlenkvorrichtung 26 und mittels des Folienrand-Führungsschlitzes 29 erfolgt.

Die Formschultern 32, 33 definieren, wie insbesondere auch in den **Fig. 2 bis 4** dargestellt, mit einander gegenüberliegenden Schulterrändern 34, 35 einen Durchtrittsspalt 36, in den im Bereich der Eintrittsöffnung 28 die Portionseinheit 12 zusammen mit den Portionsanschlägen 18, 19 eingeführt und aus dem die Portionsanschläge 18, 19 nach Übergabe der Portionseinheit 12 an die die Portionseinheit 12 zusammen mit der Folienbahn 11 am Umfang aufnehmende Vertikalfördereinrichtung 22, die Portionsanschläge 18, 19 bei Fortsetzung ihrer Umlaufbewegung auf dem Umlaufförderer 16 wieder austreten.

Vor dem Eintritt der Folienbahn 11 in die Eintrittsöffnung 28 der Folienbahnumlenkvorrichtung 26 erfolgt bei dem in **Fig. 1** dargestellten Ausführungsbeispiel eine Umlenkung der Folienbahn 11 über ein Paar Einlaufrollen 37, 38, derart, dass die Folienbahn 11 in einer zur Eintrittsöffnung 28 hin ansteigenden Führungsebene 39 verläuft, die durch den Umfang der Führungsrolle 38 und einer zur Eintrittsöffnung 28 hin ansteigenden Führungsflanke 40 gebildet ist. Im Bereich der Eintrittsöffnung 28 treffen die Folienbahn 11 und die Portionseinheit 12 so aufeinander, dass sich die Folienbahn 11 an den Außenumfang der Portionseinheit 12 anschmiegt und sich bei weiterer Förderung der Folienbahn 11 und der Portionseinheit 12 durch die Vertikalfördereinrichtung 22 eine zunehmende Bedeckung der äußeren Oberfläche der Portionseinheit 12 mit der Folienbahn 11 einstellt.

Wie insbesondere die **Fig. 2 und 3** zeigen, weisen die Schulterränder 34, 35 jeweils eine Führungskante 44, 45 auf, die zusammen eine Folienbahnführungsebene 41 definieren, die unter einem Führungswinkel α gegenüber der Hüllachse 27 geneigt ist und sich von der Eintrittsöffnung 28 in Richtung auf den Folienrand-Führungsschlitz 29 erstreckt. Weiterhin zeigt insbesondere die **Fig. 2**, dass Führungskantenabschnitte 42, 43 unter einem Winkel β zueinander geneigt sind, derart, dass die Führungskanten 44, 45 in Richtung auf den Folienrand-Führungsschlitz 29 V-förmig aufeinander zulaufen.

Im Fall des in den **Fig. 1 bis 4** dargestellten Ausführungsbeispiels erstrecken sich die Führungskanten 44, 45 der Formschultern 32, 33 sogar von der Eintrittsöffnung 28 bis zum Folienrand-Führungsschlitz 29 hin.

Wie insbesondere aus der Darstellung in **Fig.1** deutlich wird, schmiegen sich im Verlauf der Ausbildung der Folienumhüllung 24 Folienränder 46, 47 an Führungsflanken 48, 49 der Formschultern 32, 33 an, die Anlageflächen für die Folienränder 46, 47 ausbilden und so beschaffen sind, dass sie die Führungskanten 44, 45 darin unterstützen, dass trotz der Umlenkung der Folienbahn 11 keine Spannungsverteilungen in der Folienbahn 11 entstehen, die zu unerwünschten plastischen Verformungen oder zur Faltenbildung in der Folienbahn 11 führen könnten.

Wie insbesondere **Fig. 4** zeigt, sind bei der Folienumlenkvorrichtung 26 die Formschultern 32, 33 über ein Kragenstück 50 miteinander verbunden, derart, dass die Eintrittsöffnung 28 zum horizontalen Förderbahnabschnitt 30 hin geschlossen ist und das Nackenstück 50 die bereits erwähnte, zur Eintrittsöffnung 28 hin ansteigende Führungsflanke 40 für die Folienbahn 11 ausbildet. Weiterhin ist in **Fig. 4** besonders gut der Folienrand-Führungsschlitz 29 zu erkennen, in den die Folienränder 46, 47 (**Fig. 1**) nach Verlassen der Führungsflanken 48, 49 parallel aufeinander liegend eingeführt werden, so dass mittels einer unterhalb der Folienbahnumlenkvorrichtung 26 angeordneten, in **Fig. 1** nicht näher dargestellten Längssiegeleinrichtung, die Verbindung der Folienränder 46, 47 miteinander erfolgen kann.

Nachfolgend kommt eine ebenfalls in **Fig. 1** nicht näher dargestellte Quersiegeleinrichtung zum Einsatz, die in einem zwischen zwei Portionseinheiten 12 ausgebildeten Folienzwischenraum 51 eine Quersiegelung mit nachfolgender Durchtrennung der Folienumhüllung im Bereich der Quersiegelung zur Vereinzelung der Verpackungseinheiten durchführt.

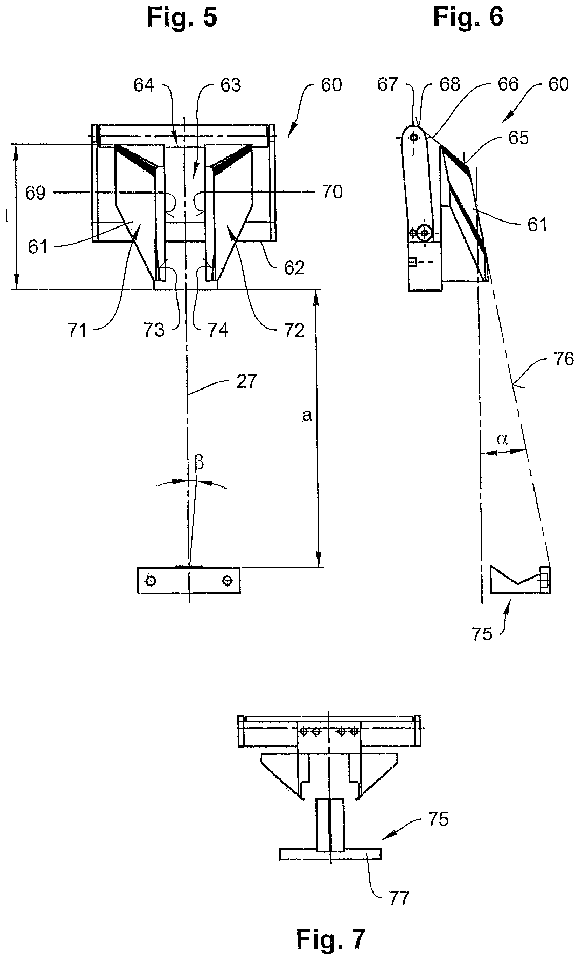

In den **Fig. 5 bis 7** ist eine Folienumlenkvorrichtung 60 dargestellt, die in alternativer Ausgestaltung zu der in den **Fig. 1 bis 4** dargestellten Folienbahnumlenkvorrichtung 26 Formschultern 61, 62 aufweist, welche unabhängig voneinander ausgebildet sind, derart, dass eine Eintrittsöffnung 63 zum horizontalen Förderbahnabschnitt 30 hin einen Kragenspalt 64 aufweist und die Formschultern 61, 62 eine zur Eintrittsöffnung 63 hin abfallende Führungsflanke 65 für die Folienbahn 11 ausbilden, die in einer gemeinsamen Führungsebene 66 mit einer durch den Rollenumfang einer Führungsrolle 67 ausgebildeten Führungsfläche 68 angeordnet ist. Im Unterschied zu der Folienbahnumlenkvorrichtung 26 weisen die Formschultern 61, 62 der Folienbahnumlenkvorrichtung 26 Führungskanten 69, 70 auf, die im Wesentlichen parallel zueinander verlaufen und durch Oberflächenränder von Führungsflanken 71, 72 gebildet sind, die in Richtung eines Folienrand-Führungsschlitzes 75 eine wesentlich geringere Erstreckung aufweisen als die Formschultern 32, 33 der Folienumlenkvorrichtung 26, da zwischen Führungskantenabschnitten 73, 74, die an dem unteren, zum Folienrand-Führungsschlitz 75 hin gerichteten Ende der Formschultern 61, 62 ausgebildet sind und dem Folienrand-Führungsschlitz 75 ein Abstand a ausgebildet ist, der größer ist als die Länge 1 der Formschultern 61, 62.

Übereinstimmend mit der Folienbahnumlenkvorrichtung 26 definieren die Führungskanten 69, 70 der Folienbahnumlenkvorrichtung 60 eine Folienbahn-Führungsebene 76, die unter einem Führungswinkel α gegenüber der Hüllachse 27 geneigt ist und sich von der Eintrittsöffnung 63 in Richtung auf den Folienrand-Führungsschlitz 75 erstreckt. Ebenfalls übereinstimmend mit der Folienbahnumlenkvorrichtung 26 verlaufen die Führungskantenabschnitte 73, 74 unter einem Winkel β zueinander, derart, dass die Führungskanten in Richtung auf den Folienrand-Führungsschlitz 75 V-förmig aufeinander zulaufen.

Im Unterschied zu der Folienbahnumlenkvorrichtung 26 ist die Folienbahnumlenkvorrichtung 60 mehrteilig ausgeführt, derart, dass die Formschultern 61, 62 nicht unmittelbar mechanisch verbunden mit dem Folienrand-Führungsschlitz 75 sind. Wie der Folienrand-Führungsschlitz 29 ist jedoch auch der Folienrand-Führungsschlitz 75 mit einer Befestigungsplatte 77 zur Befestigung am Gestell einer Vorrichtung zur Herstellung von Verpackungseinheiten versehen.

## Patentansprüche

1. Folienbahnumlenkvorrichtung (26, 60) für eine Vorrichtung zur Herstellung von Verpackungseinheiten, die eine in eine Folienbahn (11) eingehüllte Portionseinheit (12) aufweisen, mit einer Folienbahnfördereinrichtung zur Förderung einer Folienbahn längs eines horizontalen Förderbahnabschnitts (30) und eines vertikalen Förderbahnabschnitts (31),
wobei die Folienbahnumlenkvorrichtung zur Umleitung der Folienbahn von dem horizontalen Förderbahnabschnitt in den vertikalen Förderbahnabschnitt und zur Ausbildung einer Folienumhüllung (24) für eine dem vertikalen Förderbahnabschnitt zugeführte, zwischen Portionsanschlägen (18, 19) aufgenommene Portionseinheit an einem oberen Ende der Folienbahnumlenkvorrichtung auf einer vertikalen Hüllachse (27) eine von zwei Formschultern (32, 33; 61, 62) begrenzte Eintrittsöffnung (28, 63) und an ihrem unteren Ende seitlich zur Hüllachse versetzt einen Folienrand-Führungsschlitz (29, 75) aufweist,
**dadurch gekennzeichnet,**
**dass** die Formschultern mit einander gegenüberliegenden Schulterrändern (34, 35) einen Durchtrittsspalt (36) definieren zum Durchtritt der Portionsanschläge nach Übergabe der Portionseinheit an eine die Portionseinheit zusammen mit der Folienbahn am Umfang der Portionseinheit aufnehmende Vertikalfördereinrichtung (22),
wobei die Schulterränder jeweils eine Führungskante (44, 45; 69, 70) aufweisen, die eine Führungsebene (41, 76) definieren, die unter einem Führungswinkel α gegenüber der Hüllachse geneigt ist und sich von der Eintrittsöffnung in Richtung auf den Folienrand-Führungsschlitz erstreckt.

2. Folienbahnumlenkvorrichtung nach Anspruch 1,
**dadurch gekennzeichnet,**
**dass** Führungskantenabschnitte (42, 43; 73, 74) der Führungskanten (44, 45; 69, 70) unter einem Winkel β zueinander geneigt sind, derart, dass die Führungskanten in Richtung auf den Folienrand-Führungsschlitz (29, 75) V-förmig aufeinander zulaufen.

3. Folienbahnumlenkvorrichtung nach Anspruch 1 oder 2,
**dadurch gekennzeichnet,**
**dass** sich die Führungskanten (44, 45; 69, 70) der Formschultern (32, 33; 61, 62) von der Eintrittsöffnung (28, 63) zum Folienrand-Führungsschlitz (29, 75) hin erstrecken.

4. Folienbahnumlenkvorrichtung nach einem der vorangehenmden Ansprüche,
**dadurch gekennzeichnet,**
**dass** die Führungskanten (44, 45; 69, 70) durch Oberflächenränder von Führungsflanken (48, 49; 65, 66) der Formschultern (32, 33; 61, 62) gebildet sind, die Anlageflächen für Folienränder (46, 47) der Folienbahn (11) ausbilden.

5. Folienbahnumlenkvorrichtung nach einem der vorangehenden Ansprüche,
**dadurch gekennzeichnet,**
**dass** die Formschultern (32, 33) über ein Kragenstück (50) miteinander verbunden sind, derart, dass die Eintrittsöffnung (28) zum horizontalen Förderbahnabschnitt (30) hin geschlossen ist und das Kragenstück eine zur Eintrittsöffnung (28) hin ansteigende Führungsflanke (40) für die Folienbahn (11) ausbildet.

6. Folienbahnumlenkvorrichtung nach einem der Ansprüche 1 bis 4,
**dadurch gekennzeichnet,**
**dass** die Formschultern (61, 62) unabhängig voneinander ausgebildet sind, derart, dass die Eintrittsöffnung (63) zum horizontalen Förderbahnabschnitt (30) hin einen Kragenspalt (64) aufweist und die Formschultern eine zur Eintrittsöffnung hin abfallende Führungsflanke (65) für die Folienbahn (11) ausbilden, die in einer gemeinsamen Führungsebene (66) mit einer Führungsfläche (68) einer den Kragenspalt überbrückenden Führungseinrichtung angeordnet ist.

7. Folienbahnumlenkvorrichtung nach einem der vorangehenden Ansprüche,
**dadurch gekennzeichnet,**
**dass** der Folienrand-Führungsschlitz (29, 75) in Richtung der Hüllachse (27) betrachtet diametral gegenüberliegend dem Kragenstück (50) oder der den Kragenspalt (64) überbrückenden Führungseinrichtung angeordnet ist.

8. Vorrichtung zur Herstellung von Verpackungseinheiten, die eine in eine Folienbahn (11) eingehüllte Portionseinheit (12) aufweisen, mit einer Folienbahn-Fördereinrichtung zur Förderung einer Folienbahn (11) längs eines horizontalen Förderbahnabschnitts (30) und eines vertikalen Förderbahnabschnitts (31), einer Portionsfördereinrichtung (15) zur Förderung der Portionseinheiten, einer Folienbahnumlenkvorrichtung (26, 60) zur Umlenkung der Folienbahn von dem horizontalen Förderbahnabschnitt in den vertikalen Förderbahnabschnitt und zur Ausbildung einer Folienumhüllung (24) für die dem vertikalen Förderbahnabschnitt zugeführten, zwischen Portionsanschlägen (18, 19) aufgenommenen Portionseinheiten, und einer die Portionsenheiten zusammen mit der Folienbahn am Umfang aufnehmenden Vertikalfördereinrichtung (22), wobei die Folienbahnumlenkvorrichtung die Merkmale eines der Ansprüche 1 bis 7 aufweist.

## Claims

1. A film web deflecting device (26, 60) for a device for manufacturing packaging units which have a portion unit (12) enveloped in a film web (11), the device comprising a film web conveyor for conveying a film web along a horizontal conveying track portion (30) and along a vertical conveying track portion (31),
the film web deflecting device, for diverting the film web from the horizontal conveying track portion into the vertical conveying track portion and for realizing a film envelope (24) for a portion unit supplied to the vertical conveying track portion and received between portion stops (18, 19), having an inlet opening (28, 63), which is delimited by two shaping shoulders (32, 33; 61, 62), on an upper end of the film web deflecting device on a vertical enveloping axis (27), and having a film edge guide slot (29, 75) on its lower end laterally offset with respect to the enveloping axis,
**characterized in that**
opposing shoulder edges (34, 35) of the shaping shoulders define a passage gap (36) for the passage of the portion stops after the portion unit has been transferred to a vertical conveyor (22) which receives the portion unit together with the film web on the periphery of the portion unit,
each of the shoulder edges having a guide ridge (44, 45; 69, 70), said guide ridges defining a guide plane (41, 76) which is inclined relative to the enveloping axis at a guide angle α, and extends from the inlet opening in the direction of the film edge guide slot.

2. The film web deflecting device according to claim 1,
**characterized in that**
guide ridge portions (42, 43; 73, 74) of the guide
ridges (44, 45; 69, 70) are inclined with respect to one another at an angle β in such a manner that the guide ridges converge in the shape of a V towards the film edge guide slot (29, 75).

3. The film web deflecting device according to claim 1 or 2,
**characterized in that**
the guide ridges (44, 45; 69, 70) of the shaping shoulders (32, 33; 61, 62) extend from the inlet opening (28, 63) towards the film edge guide slot (29, 75).

4. The film web deflecting device according to any one of the preceding claims,
**characterized in that**
the guide ridges (44, 45; 69, 70) are formed by surface edges of guide flanks (48, 49; 65, 66) of the shaping shoulders (32, 33; 61, 62), the guide flanks forming abutment faces for film edges (46, 47) of the film web (11).

5. The film web deflecting device according to any one of the preceding claims,
**characterized in that**
the shaping shoulders (32, 33) are connected to each other via a collar piece (50) in such a manner that the inlet opening (28) is closed towards the horizontal conveying track portion (30) and the collar piece forms a guide flank (40) for the film web (11), the guide flank ascending towards the inlet opening (28).

6. The film web deflecting device according to any one of claims 1 to 4,
**characterized in that**
the shaping shoulders (61, 62) are realized independently of each other in such a manner that the inlet opening (63) has a collar gap (64) towards the horizontal conveying track portion (30) and the shaping shoulders form a guide flank (65) for the film web (11), the guide flank descending towards the inlet opening and being arranged in a common guide plane (66) with a guide face (68) of a guide means that bridges the collar gap.

7. The film web deflecting device according to any one of the preceding claims,
**characterized in that**
the film edge guide slot (29, 75), as viewed in the direction of the enveloping axis (27), is arranged so as to be diametrically opposed to the collar piece (50) or to the guide means that bridges the collar gap (64).

8. A device for manufacturing packaging units which have a portion unit (12) enveloped in a film web (11), the device comprising a film web conveyor for conveying a film web (11) along a horizontal conveying track portion (30) and along a vertical conveying track portion (31), a portion conveyor (15) for conveying the portion units, a film web deflecting device (26, 60) for deflecting the film web from the horizontal conveying track portion into the vertical conveying track portion and for realizing a film envelope (24) for the portion units supplied to the vertical conveying track portion and received between portion stops (18, 19), and comprising a vertical conveyor (22) which receives the portion units together with the film web on the periphery, the film web deflecting device having the features of any one of claims 1 to 7.

## Revendications

1. Dispositif de renvoi de bande de film (26, 60) pour un dispositif de production d'unités d'emballage qui ont une portion unitaire (12) enveloppée dans une bande de film (11), le dispositif comprenant un dispositif de transport de bande de film destiné à transporter une bande de film le long d'une partie de voie de transport horizontale (30) et d'une partie de voie de transport verticale (31),
le dispositif de renvoi de bande de film, pour dévier la bande de film à partir de la partie de voie de transport horizontale dans la partie de voie de transport verticale et pour former une enveloppe de film (24) pour une portion unitaire amenée à la partie de voie de transport verticale et située entre deux butées de portion (18, 19), ayant un orifice d'entrée (28, 63) limité par deux épaulements de formage (32, 33 ; 61, 62) sur un axe d'enveloppement (27) vertical à une extrémité supérieure du dispositif de renvoi de bande de film et ayant une fente de guidage de bord de film (29, 75) décalée latéralement par rapport à l'axe d'enveloppement à son extrémité inférieure,
**caractérisé en ce que**
des bords d'épaulement (34, 35) opposés des épaulements de formage définissent une fente de passage (36) pour le passage des butées de portion après le transfert de la portion unitaire à un convoyeur vertical (22) recevant la portion unitaire conjointement avec la bande de film sur la circonférence de la portion unitaire,
chacun des bords d'épaulement ayant une arête de guidage (44, 45 ; 69, 70), les arêtes de guidage définissant un plan de guidage (41, 76) qui est incliné d'un angle α par rapport à l'axe d'enveloppement et s'étend de l'orifice d'entrée en direction de la fente de guidage de bord de film.

2. Dispositif de renvoi de bande de film selon la revendication 1,
**caractérisé en ce que**
des sections (42, 43 ; 73, 74) des arêtes de guidage (44, 45 ; 69, 70) sont inclinées d'un angle β l'une à l'autre de telle manière que les arêtes de guidage convergent en forme de V vers la fente de guidage de bord de film (29, 75).

3. Dispositif de renvoi de bande de film selon la revendication 1 ou 2,
**caractérisé en ce que**
les arêtes de guidage (44, 45 ; 69, 70) des épaulements de formage (32, 33 ; 61, 62) s'étendent de l'orifice d'entrée (28, 63) vers la fente de guidage de bord de film (29, 75).

4. Dispositif de renvoi de bande de film selon l'une quelconque des revendications précédentes,
**caractérisé en ce que**
les arêtes de guidage (44, 45 ; 69, 70) sont formées par des bords de surface des flancs de guidage (48, 49 ; 65, 66) des épaulements de formage (32, 33 ; 61, 62) qui forment des surfaces de contact pour des bords de film (46, 47) de la bande de film (11).

5. Dispositif de renvoi de bande de film selon l'une quelconque des revendications précédentes,
**caractérisé en ce que**
les épaulements de formage (32, 33) sont connectés l'un à l'autre par une collerette (50) de telle manière que l'orifice d'entrée (28) est fermé vers la partie de voie de transport horizontale (30) et la collerette forme un flanc de guidage (40) montant vers l'orifice d'entrée (28) pour la bande de film (11).

6. Dispositif de renvoi de bande de film selon l'une quelconque des revendications 1 à 4,
**caractérisé en ce que**
les épaulements de formage (61, 62) sont formés indépendamment l'un de l'autre de telle manière que l'orifice d'entrée (63) a une fente de collerette (64) de côté de la partie de voie de transport horizontale (30) et les épaulements de formage forment un flanc de guidage (65) descendant vers l'orifice d'entrée pour la bande de film (11), le flanc de guidage étant disposé dans un plan de guidage (66) commun avec une surface de guidage (68) d'un dispositif de guidage pontant la fente de collerette.

7. Dispositif de renvoi de bande de film selon l'une quelconque des revendications précédentes,
**caractérisé en ce que**
vue en direction de l'axe d'enveloppement (27), la fente de guidage de bord de film (29, 75) est disposée de façon diamétralement opposée à la collerette (50) ou au dispositif de guidage pontant la fente de collerette (64).

8. Dispositif de production d'unités d'emballage qui ont une portion unitaire (12) enveloppée dans une bande de film (11), le dispositif comprenant un dispositif de transport de bande de film destiné à transporter une bande de film (11) le long d'une partie de voie de transport horizontale (30) et d'une partie de voie de transport verticale (31), un convoyeur de portions (15) destiné à transporter les portions unitaires, un dispositif de renvoi de bande de film (26, 60) destiné à dévier la bande de film à partir de la partie de voie de transport horizontale dans la partie de voie de transport verticale et à former une enveloppe de film (24) pour les portions unitaires amenées à la partie de voie de transport verticale et situées entre des butées de portion (18, 19), et un convoyeur vertical (22) recevant les portions unitaires conjointement avec la bande de film sur leur circonférence, dans lequel le dispositif de renvoi de bande de film présente les caractéristiques de l'une quelconque des revendications 1 à 7.
